# EUROPEAN PATENT SPECIFICATION

(11) **EP 1 262 689 B1**
(45) Date of publication and mention of the grant of the patent: **18.08.2004**
(21) Application number: 02011432.8
(22) Date of filing: 24.05.2002
(51) Int. Cl.: F16H 59/02

(54) **A device for controlling an automatic and sequential gearbox**
Vorrichtung zur Steuerung eines automatischen und sequentiellen Getriebes
Dispositif pour commander une boîte de vitesses automatique et séquentielle

(30) Priority: 30.05.2001 IT TO20010515
(43) Date of publication of application: 04.12.2002
(73) Proprietor: Sila Holding Industriale S.p.A., 10042 Nichelino(Torino) (IT)
(72) Inventor: Martelli, Luigino, 10048 Garino Di Vinovo (Torino) (IT); Melis, Salvatore, 10093 Collegno (Torino) (IT)
(74) Representative: Fioravanti, Corrado

(56) References cited:
- EP-A- 0 413 116
- EP-A- 0 575 658
- EP-A- 0 770 799
- EP-A- 0 978 669

## Description

The present invention relates to a device for controlling a motor-vehicle gearbox which can operate alternatively in automatic or sequential mode, as specified in the preamble to Claim 1.

Gearboxes which can operate both in conventional automatic mode and in sequential mode are currently being promoted with success, not only in high-level motorcars, but also in those of a lower level. As is known, in the first case, the driver of the motor vehicle can operate a gear-selection lever by moving it between various engagement positions, which are generally the following five positions:
- "P" (parking): for parking and when the vehicle is stationary;
- "R" (reverse): for driving backwards;
- "N" (neutral): the neutral position;
- "D" (drive): for normal driving, and
- "L" (low): for driving on steep gradients.

In the sequential mode of operation, on the other hand, the gear-selection lever can be moved between the following three positions:
- "+": to change to a higher gear;
- "0": the central, rest position, and
- "-": to change to a lower gear.

In this case, the gear lever is kept at rest in the central "0" position; movement of the lever towards the "+" position brings about an upward change to a gear or ratio immediately higher than that which is currently engaged, whereas movement to the "-" position brings about a downward change by one gear. The gearbox is usually operated in a servo-assisted manner under the control of an electronic control system which receives appropriate consent signals when the movement of the selection lever towards one of the two active positions "+" and "-" is detected.

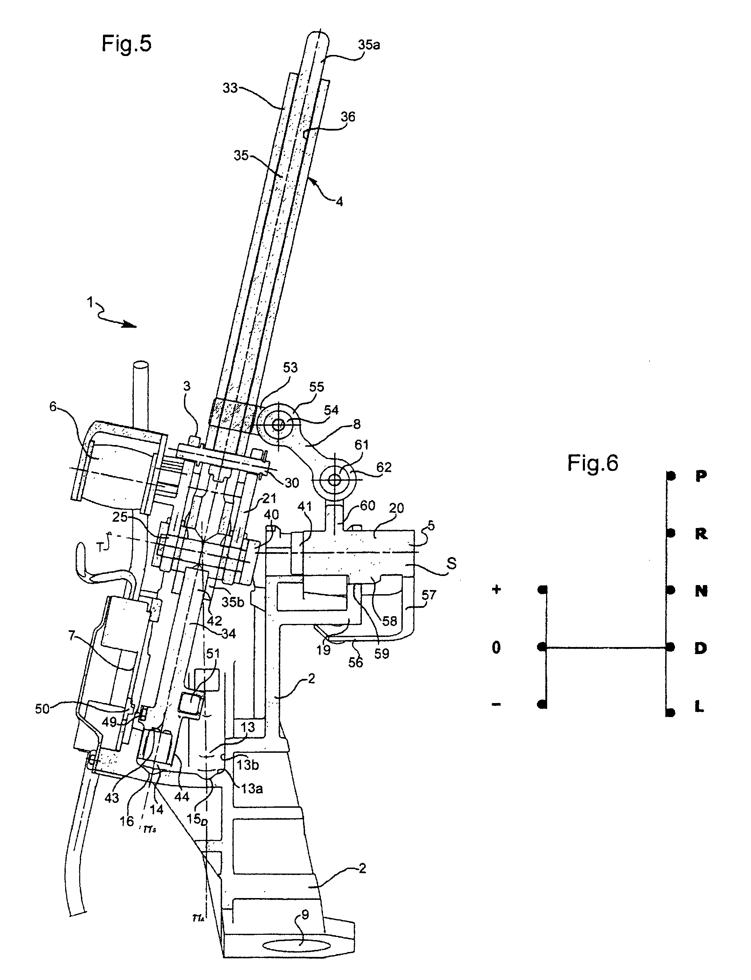

Figure 6 of the appended drawings shows a typical example of the arrangement of the gears on a selection-lever positioning grid for automatic/sequential gearbox control.

The gear-selection lever can pivot in a first, substantially longitudinal plane π_{A} in order to move, alternatively, into one of the above-mentioned five engagement positions corresponding to the automatic mode of operation, and in a second plane π_{S}, which is inclined relative to the plane π_{A}, for the engagement of the gears in the sequential mode of operation. Movement from one operating plane to the other is permitted between the positions "D" (normal driving in automatic mode) and "0" (the rest position in sequential mode) by pivoting of the gear lever in a transverse plane.

A device according to the preamble of Claim 1 is known from EP 0 770 799. In this known device the transmission lever is rotatably mounted about the same transverse axis of rotation as the selection lever and can be coupled rotationally with the selection lever as a result of the engagement of a side projection formed on the transmission lever in an opening provided in the selection lever.

The aim of the present invention is to provide a device for controlling a motor-vehicle gearbox which can operate alternatively in automatic or sequential mode, which device is structurally simple, has small dimensions, ensures precise and reliable operation, and permits a change from one operating condition to the other without jamming, and in any driving condition.

This and other aims are achieved in full, according to the invention, by means of a device for controlling a motor-vehicle gearbox as set forth in the characterizing portion of Claim 1.

A preferred but non-limiting embodiment of the invention will be described below with reference to the appended drawings, in which:
Figure 1 is a general perspective view of a device according to the invention for controlling an automatic/sequential gearbox, with the selection lever in the rest position "0" of the sequential mode of operation,
Figure 2 is a cross-section through the control device of Figure 1 with the selection lever in the idle position "N" of the automatic mode of operation,
Figure 3 is a longitudinal section through the control device of Figure 1 with the selection lever in the idle position "N" of the automatic mode of operation,
Figure 4 is a cross-section through the control device of Figure 1 with the selection lever in the normal driving position "D" of the automatic mode of operation,
Figure 5 is a cross-section through the control device of Figure 1 with the selection lever in the rest position "0" of the sequential mode of operation, and
Figure 6 is a diagram illustrating the arrangement of the gears on a selection-lever positioning grid of an automatic/sequential gearbox.

In the description and in the appended claims, terms such as "longitudinal", "transverse", and "lateral" are intended to refer to the condition of mounting on the motor vehicle.

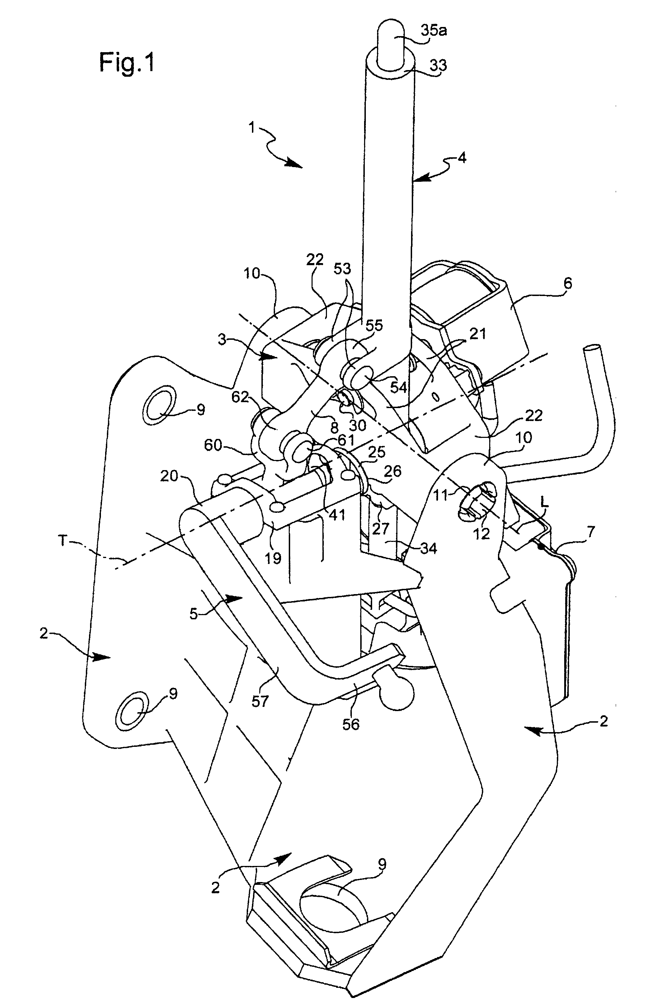

With reference to Figure 1, a device according to the invention, generally indicated 1, for controlling an automatic/sequential gearbox comprises, basically, the following components:
- a fixed support body 2,
- a movable body 3,
- a selection lever 4,
- a transmission lever 5,
- an electromagnet 6,
- a printed circuit 7, and
- a connecting rod 8.

The fixed body 2, which is intended to house the various components of the control device 1 in order to permit their correct relative positions and to ensure their correct operation, is securely fitted in the vehicle by conventional fixing means inserted through holes 9.

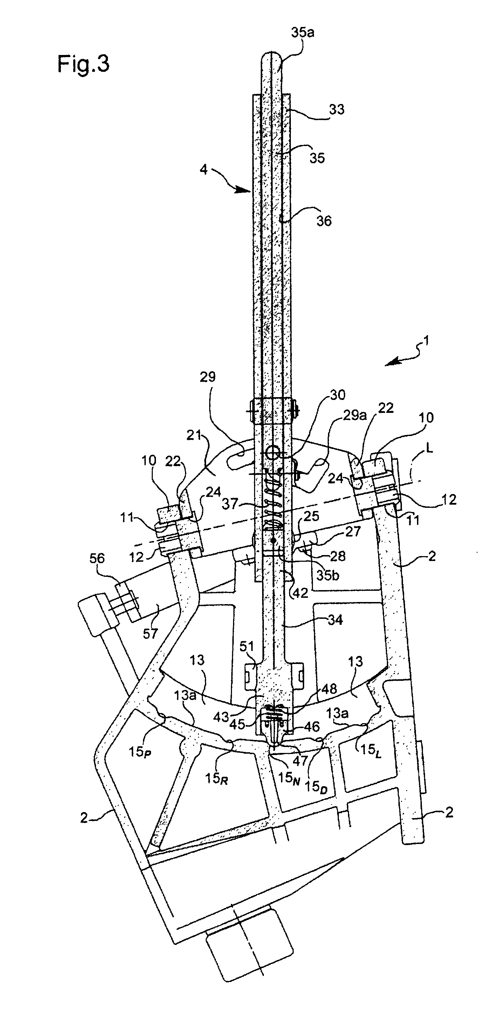

Longitudinally spaced-apart and aligned seats 11 are formed in two upper appendages 10 of the fixed body 2 and respective pins 12 for supporting the movable body 3 (Figures 1 and 3) are inserted therein so as to be rotatable about an axis L lying in a longitudinal plane. As will be explained in greater detail below, pivoting of the movable body 3 and of the selection lever 4 supported thereby brings about movement of this lever between the above-mentioned pivoting planes π_{A} and π_{S} and hence the switching of the gearbox between the automatic and sequential modes of operation.

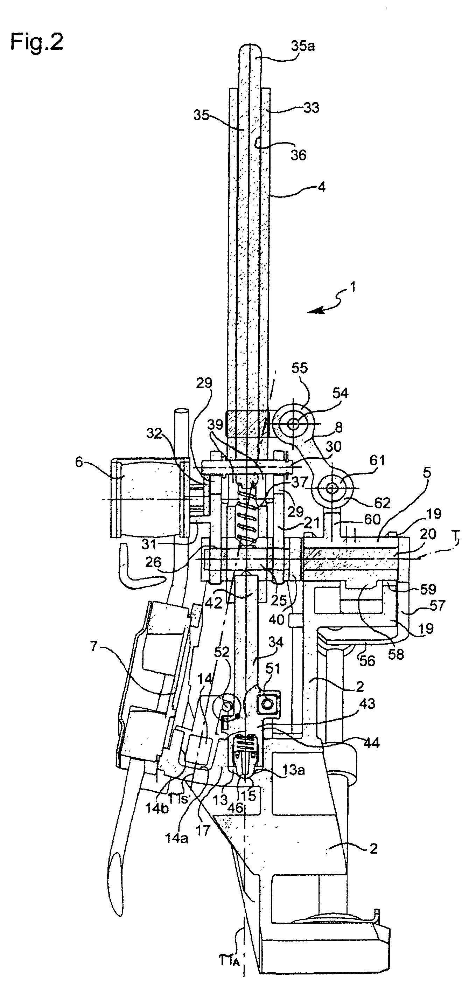

With reference to Figure 2, two substantially parallel guide tracks 13 and 14 are formed in the lower portion of the fixed body 2 for guiding the pivoting movement of the selection lever 4 in plane π_{A} for operation in automatic mode and in plane π_{S} for operation in sequential mode respectively. As already explained in the introductory portion, these planes are inclined to one another transversely and are oriented in a manner such that the pivoting of the selection lever 4 in each of them defines a path which, when viewed in projection onto a horizontal plane, runs substantially longitudinally.

In longitudinal section, both of the guide tracks 13 and 14 have circular arc-shaped profiles with their centres on a transverse geometrical axis T which is fixed relative to the movable body 3, and about which the selection lever 4 can pivot (Figure 2).

As can clearly be seen in Figure 3, which shows a section through the control device 1, taken in the plane π_{A}, a plurality of indentations 15 are formed in a sliding surface 13a of the track 13 and are spaced apart evenly along the circular arc-shaped profile to define the engagement positions of the selection lever 4 for operation in automatic mode. In particular, proceeding anticlockwise along the track 13 (with respect to the observer of Figure 3), the reference numerals of the indentations 15 are distinguished from one another by the addition of the subscripts P, R, N, D, L, each of which identifies the homonymous engagement position of the gearbox in the automatic mode of operation.

It will also be noted, still with reference to Figure 3, that the axis of pivoting L of the movable body 3 is oriented in the longitudinal plane π_{A} in a manner such as to be perpendicular to the selection lever 4 when the lever is in the engagement position D, that is, in the indentation 15_{D}, along the guide track 13.

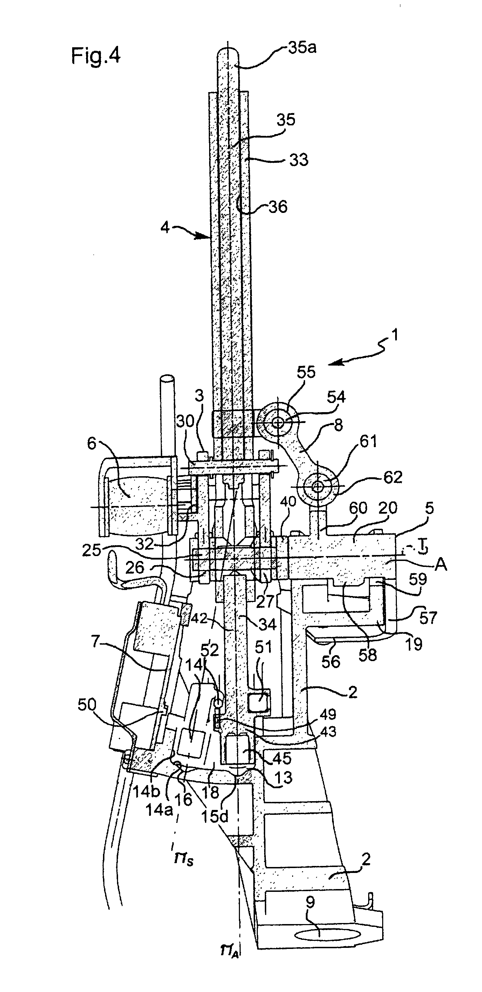

A single indentation 16 is formed on a sliding surface 14a of the guide track 14 (Figure 4) and defines the rest position "0" for the selection lever 4 in the sequential mode of operation.

The guide tracks 13 and 14 also have lateral guide surfaces 13b and 14b, respectively, and are separated from one another by an intermediate wall 17 (Figure 2). A transverse passageway 18, visible in Figure 4, is formed in this wall aligned with the positions "D" (automatic operation) and "0" (sequential operation) to allow the selection lever 4 to move from one guide track to the other when the driver switches the mode of operation of the gearbox by moving the lever sideways, thus causing the movable body 3 and the selection lever 4 to pivot together about the axis L.

The fixed body 2 also has, laterally, on the side on which the plane π_{A} is disposed, a support 19 with a transverse horizontal axis for the mounting of a substantially cylindrical, shaft-like portion 20 secured to or integral with the transmission lever 5.

The movable body 3 which supports the selection lever 4 has a hollow structure extending vertically, open at the top and at the bottom so that the lever can extend through it, and having a rectangular cross-section with two parallel longitudinal walls 21 connected by two parallel transverse walls 22.

With reference to Figure 3 in particular, holes 24 are formed in the transverse walls 22 of the body 3 for the insertion of the support pins 12 which engage in the seats 11 of the fixed body 2 for allowing the body 3 to pivot about the axis L during the switch between one mode of operation and the other. A portion 25 in the form of a transverse pin secured to the selection lever 4 is carried in the region of the lower edges of the longitudinal walls 21, in a substantially central position (Figure 2).

The pin 25 is mounted for rotating about its own axis in a cylindrical seat 26 an upper portion of which is formed in the lower edges of the longitudinal walls 21 of the body 3 and a lower portion of which is in a bracket 27 fixed to these walls by means of scraws 28 or other connecting members (Figure 3).

The longitudinal walls 21 of the movable body 3 also have a pair of suitably-shaped slots 29 in which a mechanical restraint pin 30 can move, as explained in the following part of the description.

Finally, the longitudinal wall 21 of the movable body 3 which faces towards the operating plane π_{S} has an outwardly-projecting bracket 31 for the fixing of the electromagnet 6. The latter is arranged to move a plate 32 transversely between a first, extended position (Figure 2) in which the plate blocks the movement of the mechanical restraint pin 30 and a second, retracted position which permits the movement of the pin 30 in the pair of slots 29.

With reference to Figure 2 in particular, the selection lever 4, which is supported by the movable body 3 by means of the transverse pin 25 for pivoting about the axis T, comprises, basically:
- a cylindrical tube 33 projecting from the top of the body 3 for operation by the driver of the motor vehicle, and
- a lower element 34 which is fitted in the tube 33 below the transverse pin 25 and can engage the guide tracks 13 and 14 formed in the fixed body 2.

A rod 35 arranged for sliding along an inner cylindrical surface 36 of the cylindrical tube 33 has:
- an upper end portion 35a in the form of a push-button which projects from the top of the tube 33 in order to be depressed by the driver of the motor vehicle in order to release the mechanical restraint, and
- a lower end portion 35b in which the mechanical restraint pin 30 is fitted transversely, the pin passing through a pair of openings 39 formed vertically in the tube 33, in order to engage the slots 29 of the movable body 3.

As a result of the upward biasing force exerted by a resilient element 37, such as a conventional helical torsion spring, interposed between the pin 25 of the selection lever 4 and the lower end 35b of the rod 35, the rod 35 is kept, at rest, in an upper travel-limit position defined by the abutment of the mechanical restraint pin 30 against the upper profiles of the slots 29 (Figure 2).

Fixed firmly to the selection lever 4 in the vicinity of the lower end of the tube 33 is the fulcrum pin 25 which can be supported rotatably in the seat 26 of the movable body 3. An engagement face tooth 40 formed on the face of the pin 25 which faces towards the transmission lever 5 can engage a diametral groove 41 formed in the laterally inner face of the shaft-like portion 20 of the lever 5 when the selection lever 4 is disposed in the plane π_{A} for the operation of the gearbox in automatic mode (Figures 2 and 4) so as to transmit the pivoting movement of the selection lever about its own axis T to the transmission lever.

As can be seen in Figure 2, the lower element 34 of the selection lever 4 comprises:
- an upper cylindrical portion 42 fitted in the bottom of the tube 33, and
- a lower portion 43 which has two parallel, longitudinal, outer surfaces 44, which can slide along the lateral surfaces 13b and 14b of the guide tracks 13 and 14, and an internal cavity 45, which is open at the bottom.

A pawl 46, which has a spherical head 47 and is loaded by a spring 48, is arranged for sliding axially in the cavity 45 and can engage the indentations 15 of the track 13 (operation in automatic mode) or the indentation 16 of the track 14 (operation in sequential mode) to ensure that the selection lever 4 is located correctly in the selected position.

A magnet 49 is fitted in one of the lateral surfaces 44 of the lower element 34 of the selection lever 4, on the side facing the electromagnet 6 and the printed circuit 7. The magnet 49 is arranged at a height such as not to interfere with the lateral guide surfaces 13b, 14b of the guide tracks 13, 14 and to face Hall-effect sensors 50 mounted on the printed circuit 7 when the lever 4 is moved in the plane π_{S} for the operation of the gearbox in sequential mode (Figure 5). The movement of the selection lever 4 from the rest position "0" to the position "+" or to the position "-" can thus be detected by the sensors 50, cooperating with the magnet 49, in order to send consent signals for the engagement of a higher or lower gear, respectively, to an electronic control unit of the gearbox.

With further reference to Figure 5, a resilient device 51 is mounted on the lower element 34 of the selection lever 4, on the side transversely remote from the magnet 49 and, when the lever 4 is moved sideways into the operating plane π_{S} for operation in sequential mode, can interact with two catch projections 52 arranged facing one another longitudinally on the fixed body 2 to ensure the return of the selection lever from one of the two active positions "+" and "-" to the rest position "0", after each operation.

Finally, two transverse arms 53 are fixed to the cylindrical tube 33 of the selection lever 4, above the movable body 3, for supporting a first longitudinal pin 54 for the articulation of a head 55 of the connecting rod 8 (Figure 1).

As mentioned above, the cylindrical shaft-like portion 20 of the transmission lever 5 is mounted for rotating on the support 19 about a horizontal transverse axis which, in the operation of the gearbox in automatic mode, that is, when the selection lever 4 is in the plane π_{A}, is substantially coaxial with the pin 25 of that lever (axis T).

The shaft 20 can also be moved axially, that is, in a transverse direction, between
a first, transversely inner position A, shown in Figure 4, in which the shaft 20 is coupled rotationally with the selection lever 4 when the lever is disposed in the plane π_{A} for the automatic mode of operation, in order to operate a control member on the gearbox by means of a flexible cable (not shown) connected to one end 56 of an arm 57 of the transmission lever 5; and
a second, transversely outer position S, shown in Figure 5, in which the shaft 20 is rotationally uncoupled from the selection lever 4 when the lever is in the plane π_{S} for operation in sequential mode, in order to ensure sequential operation of the gearbox.

In addition to the diametral groove 41 on its face facing towards the selection lever 4, the cylindrical shaft 20 of the transmission lever 5 has a tooth 58 formed on its lateral surface for engaging in a transverse slot 59 of the support 19 (clearly visible in Figure 4) as a result of the movement of the lever 5 from position A to position S. The shaft 20 also has an upper bracket-like element 60 which projects from the support 19 to engage a second longitudinal pin 61 to which a lower end 62 of the connecting rod 8 is articulated (Figure 1).

When the selection lever 4 is in the plane π_{A} for operation in automatic mode (Figures 2 and 4), the transmission lever 5 is kept in position A so that the engagement face tooth 40 of the lever 4 engages the diametral groove 41 of the lever 5 in order to transmit the pivoting movement about the transverse axis T directly to the lever 5 when the driver performs a gear change.

When the selection lever 4 is moved sideways in order to pivot in the plane π_{S} for operation in sequential mode (Figure 5), however, the shaft 20 of the transmission lever 5 is moved by means of the connecting rod 8, to the position S in which the face tooth 40 of the selection lever 4 is disengaged from the diametral groove 41 of the lever 5. The rotational uncoupling of the two levers ensures that the movements imparted to the selection lever 4 from the rest position "0" towards the two active positions "+" and "-" by the driver in the sequential mode of operation are not transmitted to the transmission lever 5 and do not therefore bring about any action on the flexible cable which controls the automatic operation of the gearbox.

In the sequential mode of operation, the controls imparted to the selection lever 4 are in fact transmitted to the gearbox not by means of the flexible cable connected to the transmission lever 5 but under the control of an electronic unit which can receive any consent signals sent by the Hall-effect sensors 50. In this operating condition, to prevent the pivoting movement of the selection lever 4 in the plane π_{S} from being transmitted to the transmission lever 5 by means of the connecting rod 8, the articulated ends 55 and 62 of the connecting rod are mounted on the respective longitudinal pins 54 and 61 with sufficient clearance. Alternatively, one of the two articulation pins may be replaced by a swivel coupling (such as a ball joint).

Movement of the transmission lever 5 to the position S also brings about engagement of the tooth 58 of the shaft-like portion 20 in the slot 59 formed in the support 19 and hence locking of the pivoting of the lever 5 itself. The alignment between the engagement tooth 40 of the selection lever 4 and the groove 41 of the transmission lever 5 is thus maintained throughout the operation of the gearbox in sequential mode so that, when the user decides to change to automatic mode, he simply has to move the lever 4 sideways, without worrying about re-establishing the engagement between the tooth 40 and the groove 41.

The operation of the device 1 according to the present invention for controlling an automatic/sequential gearbox will now be described.

When the motor vehicle is stationary with the engine switched off, the selection lever 4 is necessarily disposed in position "P" (parking); this is in fact an obligatory initial condition imposed by a control system of the vehicle which does not allow the ignition key to be removed from the motor vehicle if the selection lever 4 is not in the above-mentioned position.

After the vehicle has been started, in order to move the selection lever 4, it is necessary to release the electrical and mechanical restraints which keep it locked in the initial "P" position. With reference to Figure 3, it can in fact been seen that, if the lever 4 is in the position "P" defined by the indentation 15_{P} in the sliding surface 13a of the guide track 13, the spring 37 keeps the mechanical restraint pin 30 in abutment with the end of a portion 29a of the slot 29 in the movable body 3, which portion is aligned with the lever 4 and is closed at the top. In this condition, disengagement of the pin 30 from the slot portion 29a is prevented by the plate 32 of the electromagnet 6 (Figure 2); this locking effect is commonly known as electrical restraint.

In order to move the plate 32 of the electromagnet 6 to the retracted position to release the electrical restraint, it suffices for the driver to depress the brake pedal. At this point, the mechanical restraint can also be released; in fact, if the push-button 35a of the rod 35 is depressed, the rod 35 translates downwards along the cylindrical surface 36 of the tube 33, against the biasing force of the spring 37, dragging the mechanical restraint pin 30 along with it as far as a lower travel-limit position outside the portion 29a of the slot 29.

The slot 29 in the movable body 3 is generally shaped in a manner such that, by cooperating with the pin 30, it mechanically prevents movement of the selection lever 4 from the position "N" to the position "R", from "R" to "P", and from "P" to "R", unless the push-button 35a of the rod 35 is depressed. After the driver has completed the movement of the lever 4 to the desired position, the biasing spring 37 returns the mechanical restraint pin to the locking position. In all other operating conditions, however, the selection lever 4 is free to be moved from one position to another without the need to act on the push-button 35a of the rod 35.

The pivoting of the selection lever 4 about the transverse axis T between the various engagement positions along the guide track 13 causes the transmission lever 5 (which is in position A) to pivot therewith, by virtue of the coupling between the face tooth 40 and the diametral groove 41, and thus brings about operation of the control member on the gearbox by means of the flexible cable connected to the end 56 of the lever 5.

The presence of the indentations 15 in which the spherical head 47 of the selection lever 4 can engage along the sliding surface 13a of the guide track 13, enables the user to feel that the engagement position has been reached and to be sure that this position will be maintained (also by virtue of the mechanical restraint system).

Switching from the automatic mode of operation to the sequential mode is permitted solely when the selection lever 4 is in the position "D". If, starting from this position, the driver moves the upper end of the lever 4 sideways, the movable body 3 is pivoted about the axis L until the lever is brought into the plane π_{S} for the sequential mode of operation, in the rest position "0".

As a result of the pivoting of the selection lever 4 about the axis L, the connecting rod 8 urges the transmission lever 5 transversely outwardly to the position S. The consequent disengagement of the face tooth 40 of the fulcrum pin 25 from the diametral groove 41 of the shaft 20 causes the selection lever 4 and the transmission lever 5 to be rotationally uncoupled, thus preventing operation of the gearbox in automatic mode. Moreover, the magnet 49 fitted in the lower element 34 of the selection lever 4 is moved in front of the Hall-effect sensors 50 mounted on the printed circuit 7, enabling changes in the position of the lever 4 to be detected during the operation of the gearbox in sequential mode.

As already mentioned in the introductory portion of the description, in the sequential mode of operation, the selection lever 4 can be moved from the rest position "0" forwards (towards the "+" position) or backwards (towards the "-" position) in order to engage a higher or lower gear, respectively. Once the "+" position or the "-" position has been reached, when the lever 4 is released, it returns to the rest position "0" as a result of the interaction between the resilient device 51 mounted on the lower element 34 of the lever and one of the catch projections 52 inside the fixed body 2.

The Hall-effect sensors 50 detect the movement of the selection lever 4 from the rest position "0" to one of the two active positions "+" or "-"and send a corresponding consent signal to the gearbox-control system for the execution of the shift.

In order to return to the automatic mode of operation, it suffices for the driver to move the selection lever 4 sideways from the position "0" on the guide track 14 to the position "D" on the guide track 13. The transmission lever 5 is thus shifted transversely by means of the connecting rod 8 from the position S to the position A, re-establishing the rotational coupling with the selection lever 4, by means of the face tooth 40. At the same time, the magnet 49 moves away from the sensors 50 which therefore no longer transmit any consent signals. The pivoting of the selection lever 4 about the axis L once again brings about pivoting of the transmission lever 5 therewith and hence the transmission of the controls by means of the flexible cable connected thereto.

As will be clear from the foregoing description, the use of a control device according to the invention achieves a series of advantages which can be summarized in the following points:
- small dimensions of the device,
- structural simplicity of the device and hence high reliability and ease of diagnosis and intervention in the event of a malfunction or breakage,
- direct operation of the selection lever on the flexible cable in the automatic mode of operation, by virtue of the rotational coupling of the selection lever with the transmission lever by means of the face-tooth engagement, and accordingly minimization of errors due to coupling tolerances,
- precise control of the transverse distance of the magnet on the selection lever from the Hall-effect sensors on the printed circuit, by virtue of the guide track in which the lower end of the selection lever is caused to pivot in the sequential mode of operation, and
- possibility to vary the direction of output of the flexible cable to allow the device to be fitted either on the dashboard or on the floor of the motor vehicle, simply by modification of the direction of the arm of the transmission lever.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A device (1) for controlling a motor-vehicle gearbox which can operate alternatively in automatic or sequential mode, the device comprising:
- a selection lever (4) which can pivot
about a first, longitudinal axis (L) in order to move between a first plane (π_{A}) for the operation of the gearbox in automatic mode and a second plane (π_{S}) for the operation of the gearbox in sequential mode, and
about a second, transverse axis (T) in order to move between a plurality of engagement positions (P, R, N, D, L; +, 0, -) in either of the first and second planes (π_{A}, π_{S}),
- a transmission lever (5) intended to be connected to a control member of the gearbox and which can be alternatively
coupled rotationally with the selection lever (4) about the second axis (T) when the selection lever (4) lies in the first plane (π_{A}), and
uncoupled rotationally from the selection lever (4), when the selection lever (4) lies in the second plane (π_{S});
the device being **characterized in that**
the transmission lever (5) is transversely movable between a first position (A) in which it is coupled rotationally with the selection lever (4) and a second position (S) in which it is uncoupled rotationally from the selection lever (4), and
**in that** there are provided, between the selection lever (4) and the transmission lever (5), articulation means (8) for moving the transmission lever (5) between the first and second positions (A, S) as a result of the rotation of the selection lever (4) about the first axis (L).

2. A device according to Claim 1, **characterized in that** it further comprises a first, fixed support body (2) and a second, movable body (3), the second body (3) being supported in a pivotable manner (11, 12) by the first body (2) in order to pivot about the first axis (L), the selection lever (4) being supported (25, 26) by the second body (3) in a manner such as to be fixed firmly to that body during the pivoting movement about the first axis (L) and to pivot relative to that body during the pivoting movement about the second axis (T), the transmission lever (5) being supported (19) by the first body (2) in a manner such as to slide along the second axis (T) in order to be moved transversely between the first and second positions (A, S), and also being able to pivot about the axis (T) when the selection lever (4) lies in the first plane (π_{A}).

3. A device according to Claim 1 or 2, **characterized in that** the articulation means interposed between the selection lever (4) and the transmission lever (5) comprise articulation supports (53, 60) associated with the levers (4, 5), respectively, and a connecting-rod member (8) having end portions (55, 62) connected pivotably to the supports (53, 60), respectively.

4. A device according to Claim 3, **characterized in that** the end portions (55, 62) of the connecting-rod member (8) and the articulation supports (53, 60) associated with the selection and transmission levers (4, 5) are connected by respective articulation pins (54, 61).

5. A device according to Claim 4, **characterized in that** at least one of the articulation pins (54, 61) is mounted with clearance between the respective end portion (55, 62) of the connecting-rod member (8) and the respective articulation support (53, 60), so as to allow the selection lever (4) to pivot about the axis (T) without causing the transmission lever (5) to pivot therewith.

6. A device according to Claim 5, **characterized in that** at least one of the end portions (55, 62) of the connecting-rod member (8) is connected to the respective articulation support (53, 60) by means of a ball joint or articulation.

7. A device according to Claim 2, **characterized in that** first and second guide tracks (13, 14) are formed in the first, fixed support body (2) for guiding the pivoting movement of the selection lever (4) in the first and second planes (π_{A}, π_{S}), respectively.

8. A device according to Claim 7, **characterized in that** elements (15, 16, 52) are associated with the first and second guide tracks (13, 14) of the fixed body (2) and can cooperate with the selection lever (4) to define the engagement positions (P, R, N, D, L) in the automatic mode of operation, and the positions (+, 0, -) in the sequential mode of operation.

9. A device according to Claim 8, **characterized in that** the elements associated with the guide tracks (13, 14) of the fixed body (2) comprise
- a plurality of indentations (15_{P}, 15_{R}, 15_{N}, 15_{D}, 15_{L}) in the first track (13) for defining the respective engagement positions (P, R, N, D, L) in the automatic mode of operation, and
- an indentation (16) in the second track (14) for defining the rest position (0) in the sequential mode of operation,
and **in that** a lower end (43) of the selection lever (4) has an engagement member (46) which can engage the indentations (15_{P}, 15_{R}, 15_{N}, 15_{D}, 15_{L}, 16) in the guide tracks (13, 14) to ensure the correct positioning of the selection lever (4) during the gear-selection operations.

10. A device according to Claim 9, **characterized in that** the indentations (15_{P}, 15_{R}, 15_{N}, 15_{D}, 15_{L}, 16) are formed along respective sliding surfaces (13a, 14a) of the first and second guide tracks (13, 14), and **in that** the engagement member of the selection lever (4) comprises an axially movable element (46) which is kept preloaded by a spring (48) and which has a substantially hemispherical engagement surface (47) which projects from the lower end (43) of the selection lever (4) in order to slide along the sliding surfaces (13a, 14a) of the guide tracks (13, 14) and to engage alternatively in one of the indentations (15_{P}, 15_{R}, 15_{N}, 15_{D}, 15_{L}, 16).

11. A device according to any one of Claims 7 to 10, of the type comprising
- a magnet (49) fitted on the selection lever (4), and
- a printed circuit (7) provided with position sensors (50) which, when the selection lever (4) is disposed in the second plane (π_{S}), can detect, in cooperation with the magnet (49), the movement of the lever (4) to one of the positions (+, -) for operation in sequential mode in order to send respective consent signals to an electronic gearbox control system,
**characterized in that** the selection lever (4) and the second guide track (14) have respective parallel lateral surfaces (44; 14a, 14b), the lateral surfaces (44) of the selection lever (4) being able to slide along the lateral surfaces (14a, 14b) of the guide track (14) in order to guide the movement of the lever (4) in the second plane (π_{S}) so as to ensure a substantially constant distance between the magnet (49) and the sensors (50).

12. A device according to any one of the preceding claims, **characterized in that** it further comprises engagement means (40, 41) arranged to couple the selection lever (4) and the transmission lever rotationally when the transmission lever is in the first position (A) for the operation of the gearbox in automatic mode.

13. A device according to Claim 12, **characterized in that** the engagement means provided for coupling the selection lever (4) and the transmission lever (5) rotationally comprise a toothed member (40) on one of these levers (4 or 5) and a grooved portion (41) formed in the other lever (5 or 4) for engagement by the toothed member (40).

14. A device according to Claim 13, **characterized in that** the toothed member (40) is on the selection lever (4) and **in that** the grooved portion (41) is formed in the transmission lever (5).

15. A device according to any one of Claims 12 to 14, **characterized in that** it further comprises stop means (58, 59) for locking the pivoting of the transmission lever (5) when it is in the second position (S), for the operation of the gearbox in sequential mode, so as to keep the engagement means (40, 41) rotationally aligned and thus to favour engagement when the device (1) switches to the automatic mode of operation.

16. A device according to Claim 15, when it is dependent on Claim 2, **characterized in that** the stop means for locking the pivoting of the transmission lever (5) comprise a toothed member (58) on the transmission lever (5) or on the support (19) of that lever (5) and a grooved portion (59) formed in the support (19) or in the transmission lever (5), respectively.

17. A device according to Claim 16, **characterized in that** the toothed member (58) is on the transmission lever (5) and **in that** the grooved portion (59) is formed in the support (19) of the transmission lever (5).

18. A device according to Claim 17, **characterized in that** the transmission lever (5) comprises a substantially cylindrical portion (20) which is arranged to be mounted on the support (19) and which has:
at least one engagement tooth (40), formed on its transverse face which faces towards the selection lever (4), for engagement in at least one groove (41) formed in a pivotable support (25) of the selection lever (4), and
- at least one stop tooth (58) formed on its lateral surface for engagement in at least one groove (59) formed in the support (19).

## Patentansprüche

1. Vorrichtung (1) zum Steuern eines Kraftfahrzeuggetriebes, das abwechselnd im Automatikbetrieb oder im Schaltbetrieb arbeiten kann, wobei die Vorrichtung enthält:
- einen Schalthebel (4), der verschwenkt werden kann
um eine erste Längsachse (L), um sich zwischen einer ersten Ebene (π_{A}), in der das Getriebe im Automatikbetrieb arbeitet, und einer zweiten Ebene (π_{S}) zu bewegen, in der das Getriebe im Schaltbetrieb arbeitet, und
um eine zweite Querachse (T), um sich zwischen einer Vielzahl von Einraststellungen (P, R, N, D, L; +, 0, -) sowohl in der ersten als auch in der zweiten Ebene (π_{A}, π_{S}) zu bewegen,
- einen Übertragungshebel (5), der vorgesehen ist, um mit einem Steuerelement des Getriebes verbunden zu werden, und der abwechselnd
drehbar mit dem Schalthebel (4) um die zweite Achse (T) gekuppelt werden kann, wenn der Schalthebel (4) in der ersten Ebene (π_{A}) liegt, und
der vom Schalthebel (4) drehbar entkuppelt werden kann, wenn der Schalthebel (4) in der zweiten Ebene (π_{S}) liegt;
wobei die Vorrichtung **dadurch gekennzeichnet ist,**
**dass** der Übertragungshebel (5) zwischen einer ersten Stellung (A), in der er drehbar mit dem Schalthebel (4) gekuppelt ist, und einer zweiten Stellung (S) quer bewegbar ist, in der er vom Schalthebel (4) drehbar entkuppelt ist,
und **dass** zwischen dem Schalthebel (4) und dem Übertragungshebel (5) eine Gelenkseinrichtung (8) vorgesehen ist, um den Übertragungshebel (5) zwischen der ersten und der zweiten Stellung (A, S) dadurch zu bewegen, dass der Schalthebel (4) um die erste Achse (L) gedreht wird.

2. Vorrichtung gemäß Anspruch 1, **dadurch gekennzeichnet, dass** die Vorrichtung weiters einen ersten, ortsfesten Körper (2) sowie einen zweiten, bewegbaren Körper (3) besitzt, wobei der zweite Körper (3) schwenkbar (11, 12) vom ersten Körper (2) aufgenommen wird, um sich um die erste Achse (L) zu verschwenken, wobei der Schalthebel (4) vom zweiten Körper (3) so aufgenommen (25, 26) wird, dass er während der Schwenkbewegung um die erste Achse (L) fest an diesem Körper angebracht ist und sich während der Schwenkbewegung um die zweite Achse (T) relativ verschwenkt, wobei der Übertragungshebel (5) vom ersten Körper (2) so aufgenommen (19) wird, dass er längs der zweiten Achse (T) gleitet, um zwischen der ersten und der zweiten Stellung (A, S) quer bewegt zu werden, und wobei er auch um die Achse (T) verschwenkt werden kann, wenn der Schalthebel (4) in der ersten Ebene (π_{A}) liegt.

3. Vorrichtung gemäß Anspruch 1 oder 2, **dadurch gekennzeichnet, dass** die Gelenkseinrichtung, die zwischen dem Schalthebel (4) und dem Übertragungshebel (5) liegt, gelenkige Halterungen (53, 60), die den Hebeln (4 bzw. 5) zugeordnet sind, sowie ein Verbindungsstangen-Element (8) besitzt, das mit Endteilen (55, 62) versehen ist, die mit den Halterungen (53 bzw. 60) schwenkbar verbunden sind.

4. Vorrichtung gemäß Anspruch 3, **dadurch gekennzeichnet, dass** die Endteile (55, 62) des Verbindungsstangen-Elements (8) sowie die gelenkigen Halterungen (53, 60), die dem Schalthebel und dem Übertragungshebel (4, 5) zugeordnet sind, über entsprechende Gelenkszapfen (54, 61) verbunden sind.

5. Vorrichtung gemäß Anspruch 4, **dadurch gekennzeichnet, dass** zumindest einer der Gelenkszapfen (54, 61) mit einem Zwischenraum zwischen dem entsprechendem Endteil (55, 62) des Verbindungsstangen-Elements (8) und der entsprechenden gelenkigen Halterung (53, 60) so befestigt ist, dass sich der Schalthebel (4) um die Achse (T) verschwenken kann, ohne dass der Übertragungshebel (5) mitverschwenkt wird.

6. Vorrichtung gemäß Anspruch 5, **dadurch gekennzeichnet, dass** zumindest einer der Endteile (55, 62) des Verbindungsstangen-Elements (8) mit der entsprechenden gelenkigen Halterung (53, 60) über ein Kugelgelenk oder eine Gelenkverbindung verbunden ist.

7. Vorrichtung gemäß Anspruch 2, **dadurch gekennzeichnet, dass** eine erste und eine zweite Führungsbahn (13, 14) im ersten, ortsfesten Körper (2) ausgebildet sind, um die Schwenkbewegung des Schalthebels (4) in der ersten bzw. zweiten Ebene (π_{A}, π_{S}) zu führen.

8. Vorrichtung gemäß Anspruch 7, **dadurch gekennzeichnet, dass** Elemente (15, 16, 52) der ersten und der zweiten Führungsbahn (13, 14) des ortsfesten Körpers (2) zugeordnet sind und mit dem Schalthebel (4) zusammenwirken können, um die Einraststellungen (P, R, N, D, L) im Automatikbetrieb sowie die Stellungen (+, 0, -) im Schaltbetrieb festzulegen.

9. Vorrichtung gemäß Anspruch 8, **dadurch gekennzeichnet, dass** die den Führungsbahnen (13, 14) des ortsfesten Körpers (2) zugeordneten Elemente enthalten:
- eine Vielzahl von Vertiefungen (15_{P}, 15_{R}, 15_{N}, 15_{D}, 15_{L}) in der ersten Bahn (13), um die entsprechenden Einraststellungen (P, R, N, D, L) im Automatikbetrieb festzulegen, und
- eine Vertiefung (16) in der zweiten Bahn (14), um die Ruhestellung (0) im Schaltbetrieb festzulegen,
und dass ein unteres Ende (43) des Schalthebels (4) ein Einrastelement (46) enthält, das in die Vertiefungen (15_{P}, 15_{R}, 15_{N}, 15_{D}, 15_{L}, 16) in den Führungsbahnen (13, 14) einrasten kann, um die richtige Einstellung des Schalthebels (4) während der Vorgänge zur Gangwahl sicherzustellen.

10. Vorrichtung gemäß Anspruch 9, **dadurch gekennzeichnet, dass** die Vertiefungen (15_{P}, 15_{R}, 15_{N}, 15_{D}, 15_{L}, 16) entlang von entsprechenden Gleitflächen (13a, 14a) der ersten und der zweiten Führungsbahn (13, 14) ausgebildet sind, und dass das Einrastelement des Schalthebels (4) ein axial bewegbares Element (46) enthält, das mit einer Feder (48) vorgespannt gehalten wird und eine im Wesentlichen halbkugelförmige Einrastfläche (47) besitzt, die vom unteren Ende (43) des Schalthebels (4) vorspringt, um entlang der Gleitflächen (13a, 14a) der Führungsspuren (13, 14) zu gleiten und abwechselnd in eine der Vertiefungen (15_{P}, 15_{R}, 15_{N}, 15_{D}, 15_{L}, 16) einzurasten.

11. Vorrichtung gemäß irgendeinem der Ansprüche 7 bis 10, wobei die Vorrichtung enthält:
- einen Magnet (49), der auf dem Schalthebel (4) angebracht ist, und
- eine gedruckte Schaltung (7), die mit Stellungsfühlern (50) versehen ist, die dann, wenn der Schalthebel (4) in der zweiten Ebene (π_{S}) angeordnet ist, im Zusammenwirken mit dem Magnet (49) die Bewegung des Hebels (4) in eine der Stellungen (+, -) im Schaltbetrieb abtasten können, um entsprechende Zustimmungssignale zu einem elektronischen Getriebe-Steuersystem zu senden,
**dadurch gekennzeichnet, dass** der Schalthebel (4) und die zweite Führungsbahn (14) entsprechende parallele Seitenflächen (44; 14a, 14b) besitzen, wobei die Seitenflächen (44) des Schalthebels (4) entlang der Seitenflächen (14a, 14b) der Führungsbahn (14) gleiten können, um die Bewegung des Hebels (4) in der zweiten Ebene (π_{S}) so zu führen, dass ein im Wesentlichen konstanter Abstand zwischen dem Magnet (49) und den Fühlern (50) sichergestellt wird.

12. Vorrichtung gemäß irgendeinem der bisherigen Ansprüche, **dadurch gekennzeichnet, dass** die Vorrichtung weiters Eingreifeinrichtungen (40, 41) enthält, die so angeordnet sind, um den Schalthebel (4) und den Übertragungshebel drehbar zu kuppeln, wenn der Übertragungshebel in der ersten Stellung (A) liegt, in der das Getriebe im Automatikbetrieb arbeitet.

13. Vorrichtung gemäß Anspruch 12, **dadurch gekennzeichnet, dass** die Eingreifeinrichtung, die vorgesehen ist, um den Schalthebel (4) und den Übertragungshebel (5) drehbar zu kuppeln, ein Zahnelement (40) auf einem dieser Hebel (4 oder 5) sowie einen Rillenteil (41) enthält, der im anderen Hebel (5 oder 4) ausgebildet ist, um in das Zahnelement (40) einzugreifen.

14. Vorrichtung gemäß Anspruch 13, **dadurch gekennzeichnet, dass** das Zahnelement (40) auf dem Schalthebel (4) und das Rillenelement (41) im Übertragungshebel (5) ausgebildet sind.

15. Vorrichtung gemäß irgendeinem der Ansprüche 12 bis 14, **dadurch gekennzeichnet, dass** die Vorrichtung weiters eine Halteeinrichtung (58, 59) enthält, um das Verschwenken des Übertragungshebels (5) zu verriegeln, wenn sich dieser in der zweiten Stellung (S) befindet, wenn das Getriebe im Schaltbetrieb arbeitet, um die Eingreifeinrichtung (40, 41) drehbar ausgerichtet zu halten und damit den Eingriff zu unterstützen, wenn die Vorrichtung (1) in den Automatikbetrieb umschaltet.

16. Vorrichtung gemäß Anspruch 15, wenn diese von Anspruch 2 abhängt, **dadurch gekennzeichnet, dass** die Halteeinrichtung, um das Verschwenken des Übertragungshebels (5) zu verriegeln, ein Zahnelement (58) auf dem Übertragungshebel (5) oder auf der Halterung (19) dieses Hebels (5) sowie einen Rillenteil (59) enthält, der in der Halterung (19) bzw. im Übertragungshebel (5) ausgebildet ist.

17. Vorrichtung gemäß Anspruch 16, **dadurch gekennzeichnet, dass** das Zahnelement (58) auf dem Übertragungshebel (5) und der Rillenteil (59) in der Halterung (19) des Übertragungshebels (5) ausgebildet sind.

18. Vorrichtung gemäß Anspruch 17, **dadurch gekennzeichnet, dass** der Übertragungshebel (5) einen im Wesentlichen zylindrischen Teil (20) enthält, der so angeordnet ist, dass er auf der Halterung (19) befestigt ist und besitzt:
- zumindest einen Eingreifzahn (40), der auf seiner Querfläche ausgebildet ist, die zum Schalthebel (4) gerichtet ist, um in zumindest eine Rille (41) einzugreifen, die in einer schwenkbaren Halterung (25) des Schalthebels (4) ausgebildet ist, und
- zumindest einen Haltezahn (58), der auf seiner Seitenfläche ausgebildet ist, um in zumindest eine Rille (59) einzugreifen, die in der Halterung (19) ausgebildet ist.

## Revendications

1. Dispositif (1) pour la commande d'une boîte de vitesses de véhicule à moteur pouvant fonctionner, de façon alternée, en mode automatique ou séquentiel, dispositif comprenant :
- un levier de sélection (4) pouvant pivoter autour d'un premier axe longitudinal (L) de façon à se déplacer entre un premier plan (π_{A}) pour le fonctionnement de la boîte de vitesses en mode automatique et un second plan (π_{S}) pour le fonctionnement de la boîte de vitesses en mode séquentiel, et autour d'un second axe transversal (T) de façon à se déplacer entre une pluralité de positions d'engagement (P, R, N, D, L ; +, 0, -) dans un quelconque des premier et second plans (π_{A}, π_{S}) ;
- un levier de transmission (5) prévu pour être connecté à une pièce de commande de la boîte de vitesses et pouvant être couplé de façon alternée en rotation avec le levier de sélection (4) autour du second axe (T) lorsque le levier de sélection (4) se trouve dans le premier plan (π_{A}), et découplé en rotation du levier de sélection (4) lorsque le levier de sélection (4) se trouve dans le second plan (π_{S}) ;
dispositif **caractérisé en ce que** :
- le levier de transmission (5) est mobile, de façon transversale, entre une première position (A) dans laquelle il est couplé en rotation au levier de sélection (4) et une seconde position (S) dans laquelle il est découplé en rotation du levier de sélection (4) ; et
- on prévoit entre le levier de sélection (4) et le levier de transmission (5) un moyen d'articulation (8) pour déplacer le levier de transmission (5) entre les première et seconde positions (A, S) par suite de la rotation du levier de sélection (4) autour du premier axe (L).

2. Dispositif selon la revendication 1, **caractérisé en ce qu'**il comprend, de plus, un premier corps fixé de support (2) et un second corps mobile (3), le second corps (3) étant supporté, de façon pivotante (11, 12), par le premier corps (2) afin de pivoter autour du premier axe (L), le levier de sélection (4) étant supporté (25, 26) par le second corps (3) de façon à être fermement fixé sur ce corps lors du pivotement autour du premier axe (L) et pour pivoter par rapport à ce corps lors du pivotement autour du second axe (T), le levier de transmission (5) étant supporté (19) par le premier corps (2) de façon à coulisser le long du second axe (T) afin d'être déplacé transversalement entre les première et seconde positions (A, S) et pouvant, de même, pivoter autour de l'axe (T) lorsque le levier de sélection (4) se trouve dans le premier plan (□_{A}).

3. Dispositif selon la revendication 1 ou 2, **caractérisé en ce que** le moyen d'articulation interposé entre le levier de sélection (4) et le levier de transmission (5) comprend des supports d'articulation (53, 60) associés aux leviers respectifs (4, 5) et une pièce de biellette (8) possédant des parties d'extrémité (55, 62) connectées, de façon pivotante, aux supports respectifs (53, 60).

4. Dispositif selon la revendication 3, **caractérisé en ce que** les parties d'extrémité (55, 62) de la pièce de biellette (8) et les supports d'articulation (53, 60) associés aux leviers de sélection et de transmission (4, 5) sont connectés par des broches respectives d'articulation (54, 61).

5. Dispositif selon la revendication 4, **caractérisé en ce qu'**au moins une des broches d'articulation (54, 61) est montée avec un jeu entre la partie respective d'extrémité (55, 62) de la pièce de biellette (8) et le support respectif d'articulation (53, 60) de façon à permettre au levier de sélection (4) de pivoter autour de l'axe (T) sans entraîner de pivotement conjoint du levier de transmission (5).

6. Dispositif selon la revendication 5, **caractérisé en ce qu'**au moins une des parties d'extrémité (55, 62) de la pièce de biellette (8) est connectée au support respectif d'articulation (53, 60) au moyen d'un joint ou d'une articulation à rotule.

7. Dispositif selon la revendication 2, **caractérisé en ce que** des première et seconde pistes de guidage (13, 14) sont formées dans le premier corps fixé de support (2) pour guider le pivotement du levier de sélection (4) respectivement dans les premier et second plans (π_{A}, π_{S}).

8. Dispositif selon la revendication 7, **caractérisé en ce que** des éléments (15, 16, 52) sont associés aux première et seconde pistes de guidage (13, 14) du corps fixé (2) et peuvent coopérer avec le levier de sélection (4) pour définir les positions d'engagement (P, R, N, D, L) dans le mode automatique de fonctionnement et les positions (+, 0, -) dans le mode séquentiel de fonctionnement.

9. Dispositif selon la revendication 8, **caractérisé en ce que** les éléments associés aux pistes dé guidage (13, 14) du corps fixé (2) comprennent :
- une pluralité de dentures (15_{P}, 15_{R}, 15_{N}, 15_{D}, 15_{L}) dans la première piste (13) pour définir les positions respectives d'engagement (P, R, N, D, L) dans le mode automatique de fonctionnement ; et
- une denture (16) dans la seconde piste (14) pour définir la position de point mort (0) dans le mode séquentiel de fonctionnement ;
et **en ce qu'**une extrémité inférieure (43) du levier de sélection (4) possède une pièce d'engagement (46) pouvant engager les dentures (15_{P}, 15_{R}, 15_{N}, 15_{D}, 15_{L}, 16) dans les pistes de guidage (13, 14) pour assurer le positionnement correct du levier de sélection (4) lors des opérations de sélection de rapport.

10. Dispositif selon la revendication 9, **caractérisé en ce que** les dentures (15_{P}, 15_{R}, 15_{N}, 15_{D}, 15_{L}, 16) sont formées le long de surfaces respectives de coulissement (13a, 14a) des première et seconde pistes de guidage (13, 14), et **en ce que** la pièce d'engagement du levier de sélection (4) comprend un élément mobile axialement (46) qui est maintenu sous précontrainte par un ressort (48) et qui possède une surface d'engagement sensiblement hémisphérique (47) se projetant à partir de l'extrémité inférieure (43) du levier de sélection (4) afin de coulisser le long des surfaces de coulissement (13a, 14a) des pistes de guidage (13, 14) et pour engager de façon alternée une des dentures (15_{P}, 15_{R}, 15_{N}, 15_{D}, 15_{L}, 16).

11. Dispositif selon l'une quelconque des revendications 7 à 10, du type comprenant :
- un aimant (49) monté sur le levier de sélection (4) ; et
- un circuit imprimé (7) muni de capteurs de position (50) qui, lorsque le levier de sélection (4) est disposé dans le second plan (π_{S}), peut détecter, en coopération avec l'aimant (49), le déplacement du levier (4) vers une des positions (+, -) pour un fonctionnement dans le mode séquentiel de façon à envoyer des signaux respectifs adaptés à un système de commande électronique de boîte de vitesses ;
**caractérisé en ce que** le levier de sélection (4) et la seconde piste de guidage (14) possèdent des surfaces latérales parallèles respectives (44 ; 14a, 14b), les surfaces latérales (44) du levier de sélection (4) pouvant coulisser le long des surfaces latérales (14a, 14b) de la piste de guidage (14) de façon à guider le déplacement du levier (4) dans le second plan (π_{S}) afin d'assurer une distance sensiblement constante entre l'aimant (49) et les capteurs (50).

12. Dispositif selon l'une quelconque des revendications précédentes, **caractérisé en ce qu'**il comprend, de plus, des moyens d'engagement (40, 41) prévus pour coupler en rotation le levier de sélection (4) et le levier de transmission lorsque le levier de transmission est dans la première position (A) pour un fonctionnement de la boîte de vitesses en mode automatique.

13. Dispositif selon la revendication 12, **caractérisé en ce que** les moyens d'engagement prévus pour le couplage en rotation du levier de sélection (4) et du levier de transmission (5) comprennent une pièce dentée (40) sur un de ces leviers (4 ou 5) et une partie rainurée (41) formée sur l'autre levier (5 ou 4) pour un engagement par la pièce dentée (40).

14. Dispositif selon la revendication 13, **caractérisé en ce que** la pièce dentée (40) se trouve sur le levier de sélection (4) et **en ce que** la partie rainurée (41) est formée dans le levier de transmission (5).

15. Dispositif selon l'une quelconque des revendications 12 à 14, **caractérisé en ce qu'**il comprend, de plus, des moyens de butée (58, 59) pour bloquer le pivotement du levier de transmission (5) lorsqu'il se trouve dans la seconde position (S) pour un fonctionnement de la boîte de vitesses en mode séquentiel afin de maintenir les moyens d'engagement (40, 41) alignés pour permettre une rotation et ainsi pour favoriser l'engagement lorsque le dispositif (1) commute en mode de fonctionnement automatique.

16. Dispositif selon la revendication 15, lorsque dépendante de la revendication 2, **caractérisé en ce que** les moyens de butée pour le blocage du pivotement du levier de transmission (5) comprennent une pièce dentée (58) sur le levier de transmission (5) ou sur le support (19) de ce levier (5) et une partie rainurée (59) respectivement formée dans le support (19) ou dans le levier de transmission (5).

17. Dispositif selon la revendication 16, **caractérisé en ce que** la pièce dentée (58) se trouve sur le levier de transmission (5) et **en ce que** la partie rainurée (59) est formée dans le support (19) du levier de transmission (5).

18. Dispositif selon la revendication 17, **caractérisé en ce que** le levier de transmission (5) comprend une partie sensiblement cylindrique (20) qui est prévue pour être montée sur le support (19) et possédant :
- au moins une dent d'engagement (40) formée sur sa face transversale tournée vers le levier de sélection (4) pour un engagement dans au moins une rainure (41) formée dans un support pivotant (25) du levier de sélection (4) ; et
- au moins une dent de butée (58) formée sur sa face latérale pour un engagement dans au moins une rainure (59) formée dans le support (19).
